# EUROPÄISCHE PATENTSCHRIFT

(11) **EP 2 053 293 B1**
(45) Veröffentlichungstag und Bekanntmachung des Hinweises auf die Patenterteilung: **26.11.2014**
(21) Anmeldenummer: 08018012.8
(22) Anmeldetag: 15.10.2008
(51) Int. Cl.: F16L 33/207, F16L 13/14

(54) **Adapterstück zum Verbinden von Rohren**
Adapter piece for connecting pipes
Adaptateur pour connecter des tuyaux

(30) Priorität: 25.10.2007 DE 102007051040
(43) Veröffentlichungstag der Anmeldung: 29.04.2009
(73) Patentinhaber: Wieland-Werke AG, 89079 Ulm (DE)
(72) Erfinder: Klingler, Edmund, 89269 Vöhringen (DE); Werner, Rolf, 89278 Nersingen (DE)

(56) Entgegenhaltungen:
- EP-A1- 0 523 835
- EP-A2- 0 153 739
- EP-A2- 1 306 601
- EP-B1- 0 159 997
- DE-C2- 19 845 720
- GB-A- 998 128
- GB-A- 2 088 001
- US-A- 4 281 862

## Beschreibung

Die Erfindung betrifft ein Adapterstück zum Verbinden von Rohren gemäß dem Oberbegriff des Anspruchs 1 und ein Verfahren zum Verbinden von Rohrenden mit dem Adapterstück gemäß dem Oberbegriff des Anspruchs 18.

Im Rohrleitungsbau wird eine schnelle, einfache und sichere Verbindungstechnik durch sogenannte Pressfittinge als Rohrverbinder angewandt, bei dem durch Verpressen der Systemkomponenten Pressfitting und Leitungsrohr mit einem entsprechenden Presswerkzeug eine unlösbare und mediumdichte Rohrverbindung erzeugt wird. Dabei wird die Pressfitting Verbindung hergestellt, indem das Rohr mit einer definierten Länge in den Pressfitting bis zur vorgesehenen Einschubtiefe geschoben wird und anschließend Rohr und Pressfitting miteinander verpresst werden. Durch die Verformung des Pressfittings und des Rohres wird im Regelfall eine formschlüssige Verbindung mit hoher Zug- und Torsionsfestigkeit hergestellt. In vielen Fällen bewirkt dabei ein in seinem Querschnitt verformter Dichtring über sein elastisches Rückstellvermögen eine dauerhafte Dichtheit der Verbindung.

Die schnelle, einfache und sichere Presstechnik bietet die Möglichkeit, einen hochwertigen, korrosionsbeständigen Werkstoff mit geringem Zeitaufwand zu verarbeiten. Aufwendige Vorbereitungen zur Verbindungsherstellung sowie nachfolgende Prüfungen können entfallen. Presszeiten von wenigen Sekunden bieten eine schnelle Rohrleitungsmontage und führen zu einer schnellen Verfügbarkeit des Rohrleitungssystems. Da nicht mit offener Flamme gearbeitet wird, kann eine Rohrleitungsmontage in brandgefährdeten Bereichen ohne aufwendige Brandschutzmaßnahmen auch während Ausführung anderer Gewerke ausgeführt werden.

Aus der Druckschrift DE 297 19 536 U1 ist ein Rohrverbinder zum Verbinden von verpreßbaren Kunststoff-Metall-Kunststoff Verbundrohren bekannt. Der Rohrverbinder besteht aus zumindest einem Grundkörper mit einem Anschlußbereich für eine Preßverbindung mit dem Rohr, wobei der Anschlussbereich zumindest einen inneren Rohrträger mit einem Bund, eine das Rohr umgebende Preßhülse und eine Kontrolleinrichtung zur Lagekontrolle des aufgeschobenen Rohrs. Dabei sind der innere Rohrträger und der Bund einstückig aus Kunststoff gefertigt. Die zugehörige Preßhülse besteht bevorzugt aus Edelstahl.

Aus der Druckschrift EP 0 513 292 B1 ist eine Rohrverbindung mit einer verformbaren außen liegenden Preßhülse und inneren Stützhülse bekannt, die einem zwischen der Preßhülse und einem Anschlußbereich der Stützhülse befindlichen Rohrendbereich eine wellenförmige Umformung mit Zonen unterschiedlicher Verpressung vermittelt. Auf dem Aufnahmebereich der Stützhülse kann dabei ein elastomerer Ringkörper vorgesehen sein, der als Dichtring unmittelbar gegenüber einer Vertiefung und/oder Trenn- und Dichtelement zwischen dem Stirnende eines Verbundrohres und dem Bund der Stutzhülse wirksam sein kann. Durch eine schonende Umformung der Rohrendbereiche soll eine derartige Rohrverbindung besonders für Verbundrohre, einsetzbar sein, da keine Schäden durch Schneid-, Scher- oder Kerbwirkungen im Preßbereich auftreten.

Des Weiteren ist aus der Druckschrift DE 295 15 269 U1 ein Verbindungssystem für außen und innen mit Kunststoff beschichtete Aluminium-Sanitärrohre bekannt. Eine zylinderförmige Stützhülse aus einer Messinglegierung, auf deren Außenseite mittig ein Kunststoff Fixierring mit einer Auskragung aufgepresst oder aufgespritzt ist. Der Fixierring dient als Endanschlag für die auf die Stützhülse aufgeschobenen Sanitärrohre. Die Verbindung ist so beschaffen, dass kein Metall-Metall-Kontakt von Rohr und Stützhülse auftritt und so eine durch die unterschiedlichen Materialien bedingte elektrochemische Korrosion verhindert wird.

Aus der Druckschrift EP 0 159 997 B1 ist eine Kupplungsvorrichtung zur Herstellung einer permanenten Rohrverbindung bekannt, bei der die Rohrendpartie durch zonenweise Kaltverformung mittels eines axial zu verschiebenden Pressringes zu einer formschlüssigen, dichten Verbindung mit einem Stutzen eines Rohrformstückes verpresst wird. Dabei ist eine auf die Rohrendpartie aufzuschiebende Hülse mit einem ringförmigen Außenwulst vorgesehen, die beim Aufpressen des Pressringes verformt wird, so dass das Hülsenmaterial in der Wulstzone radial nach innen verdrängt wird. Ferner weist der Stutzen an seiner Außenseite wenigstens eine Ringnut zur Aufnahme von durch den Pressring verdrängtem Material auf. Das Rohrformstück weist einen Flansch auf, an dem die Rohrendpartie, die Hülse und der Pressring zum Anschlag kommen. Der Pressring ist an seinem hinteren Ende mit einem ringförmigen Innenwulst ausgestattet, der beim Aufpressen des Pressringes auf die Hülse das Hülsenmaterial am hinteren Hülsenende radial nach innen drängt. Die Länge des Stutzens in Bezug auf die Länge des Pressringes und damit auf die axiale Lage der am hinteren Hülsenende entstehenden ringförmigen Einbuchtung ist in der Rohrendpartie so gewählt, dass das freie Ende des Stutzens den tiefsten Punkt dieser Einbuchtung nicht überragt und am freien Ende des Stutzens dessen Innenwandung wenigstens annährend bis zum Schnitt mit dessen Außenwandung allmählich erweitert ist. Dadurch wird erreicht, dass das auf die Hülse ausgeübte Pressen an den dem Flansch abgewandten Ende des Stutzens am größten ist und an in diesem Bereich eine Kaltverschweißung entsteht.

Aus der Druckschrift DE 198 45 720 C2 ist ein Anschlusselement bekannt, das mit mindestens einem Rohr eines Leitungssystems koppelbar ist. Das Anschlusselement besitzt eine Anlagefläche für eine Stirnfläche des Rohres, die einen aus einem elektrisch isolierenden Material gebildeten Anschlag aufweist. Zudem besteht das Anschlusselement aus einem Verbindungselement in Form eines übergreifenden Kunststoffringes, der einerseits am Anschlag und andererseits an einer auf das Rohr aufschiebbaren Preßhülse angeordnet ist. Durch den Kunststoffring werden die Einzelteile des Anschlusselements zusammengehalten. Der eigentliche Anschlussbereich ist mit zwei in axialem Abstand voneinander die Zylinderachse umlaufenden Nuten versehen, in die O-Ringe eingelegt sind. Der dem Anschlag abgewandten Ende benachbarte Bereich der Außenfläche des Anschlussbereichs ist mit einer Profilierung in Form von Nuten mit dreieckförmigem Querschnitt versehen. Eine ähnliche Profilierung ist auch zwischen der dem Anschlag benachbarten Nut und dem Anschlag selbst vorgesehen. Durch die Form der Nuten, welche die Profilierung des Anschlussbereichs bilden, kann eine axiale Verschiebung eines in den zwischen der Preßhülse und dem Anschlussbereich eingeschobenen Verbundrohres zuverlässig verhindert werden.

Zudem ist aus der Druckschrift GB 998 128 A, der den Oberbegriff von Anspruch 1 offenbart, ist ein Adapterstück zum Verbinden von Rohren bekannt. Im Inneren eines Rohres ist eine Stützhülse mit einer flexiblen Dichtung vorgesehen. Auf der Außenseite eines Rohres befindet sich eine Presshülse mit einem die Einschublänge des Rohres begrenzenden Flansch. Die Außenseite der Presshülse weist einen geeigneten Anschlussbereich für einen Pressverbinder auf.

Der Erfindung liegt die Aufgabe zugrunde, ein geeignetes Adapterstück zum Verbinden von Rohren gleicher oder unterschiedlicher Rohrquerschnitte weiterzubilden und Verfahren zum Verbinden von Rohrenden mit dem Adapterstück anzugeben.

Die Erfindung wird in Bezug auf das Adapterstück durch die Merkmale des Anspruchs 1 und in Bezug auf das Verfahren zum Verbinden von Rohrenden mit dem Adapterstück durch die Merkmale des Anspruchs 16 wiedergegeben. Die weiteren rückbezogenen Ansprüche betreffen vorteilhafte Aus- und Weiterbildungen der Erfindung.

Die Erfindung schließt ein Adapterstück zum Verbinden von Rohren gleicher oder unterschiedlicher Rohrquerschnitte ein, mit einer im Inneren eines Rohres anordenbaren Stützhülse, einer auf der Außenseite eines Rohres anordenbaren Presshülse und einem die Einschublänge eines Rohres begrenzenden Flansch, wobei auf der Außenseite der Stützhülse zumindest eine flexible Innendichtung angeordnet ist, die zur Rohrinnenseite hin abdichtet, und die Außenseite der Presshülse einen geeigneten Anschlussbereich für einen radial verformbaren Pressverbinder aufweist.

Die Erfindung geht dabei von der Überlegung aus, dass durch die flexible Innendichtung, die das Innere des Rohres nahe am fließenden Medium abdichtet und so im Gebrauchszustand kein Medium in den Adapter zwischen Stützhülse und Rohrinnenseite gelangt. Insbesondere bei mit Kunststoff ummantelten Kupferrohren tritt auch kein flüssiges Medium unerwünscht an die Stirnseite von Kupferrohr und Ummantelung. Die flexible Innendichtung ist dabei elastisch verformbar und besteht vorzugsweise aus Elastomeren. Zudem hat die Außenseite der Presshülse einen geeigneten Anschlussbereich für einen radial verformbaren Pressverbinder. Die Außenseite kann in der Dimension so gestaltet werden, dass genormte und bereits am Markt erhältliche Pressverbinder eingesetzt werden können. Die im Inneren eines Rohres anordenbare Stützhülse ist bei flexiblen Verbundrohren oder bei extrem dünnwandigen Kupferrohren mit Kunststoffummantelung besonders wichtig, damit durch die radial einwirkende Kraft beim Verpressen das Rohr nicht zusammen gedrückt wird.

Der besondere Vorteil besteht darin, dass insbesondere unterschiedliche Rohrquerschnitte der zu verbindenden Rohrenden ausgeglichen und mit handelsüblichen Pressverbindern zuverlässig verbunden werden können. Die flexible Innendichtung des Adapters dichtet das Innere des Rohres nahe am fließenden Medium ab.

In bevorzugter Ausgestaltung der Erfindung können Stützhülse, Presshülse und Flansch einstückig ausgebildet sein. Im Rahmen der Erfindung sind unter einstückig auch aus Einzelteilen gefügte Adapter einzubeziehen. Die Einzelteile können hierbei gelötet, geschweißt oder anderweitig gefügt sein, so dass der Adapter im einbaufertigen Zustand als ein Teil zu verstehen ist. Auch kann der Adapter aus einem Material, beispielsweise durch Tiefziehen einer Metalllegierung, gefertigt sein.

Bevorzugt können Stützhülse, Presshülse und Flansch aus Kunststoff oder Metall bzw. einer Kombination aus beiden bestehen. Hierdurch werden durch eine geeignete Stoffkombination der einzelnen Adapterbestandteile auf ihre jeweilige Funktion optimiert. Das Material für Stützhülse muss dabei eine ausreichende Stabilität gegenüber den beim Pressvorgang eingeleiteten radialen Kräften aufweisen und soll nicht verformt werden. Die Presshülse ist gegenüber der Stützhülse auf Verformung ausgelegt. Der Flansch, über den die Stützhülse mit der Presshülse verbunden ist, dient zunächst nur als endständiger Anschlag für das Rohrende und kann auch aus weicherem, duktilen oder elastischen Material bestehen.

Erfindungsgemäß weist die Außenseite der Stützhülse eine schraubenlinienförmig umlaufende Verzahnung auf. Dabei können auch mehrgängige Verzahnungen über den Rohrumfang umlaufen. Hierdurch wird ein fester Halt des Rohres im Inneren des Adapters gewährleistet, der etwaigen axialen Zugkräften standhält.

Erfindungsgemäß läuft die schraubenlinienförmige Verzahnung weniger als einen Gewindegang um. Insbesondere bei mit Kunststoff ummantelten dünnwandigen Metallrohren wird die Verzahnung in die Tiefe so ausgelegt, dass die Wanddicke des Metallrohres nicht durchdrungen wird und dennoch ein ausreichender Halt gegenüber Zugkräften vorhanden ist.

Vorteilhafterweise kann die schraubenlinienförmige Verzahnung aus umlaufenden Rippen bestehen. Die umlaufenden Rippen können wiederum mehrgängig auf der Außenseite der Stützhülse angeordnet sein. Die zwischen den Rippen liegenden Bereiche dringen beim Verpressen mit einem Pressverbinder nicht in die Rohrwandung ein, wohingegen die Rippen eine gewisse Kerbwirkung im Rohr erzielen. Durch den schraubenförmigen Verlauf entstehen zwischen den Rippen umlaufende Stränge aus unverändertem Rohrmaterial, die bei Zugbeanspruchung die Kraft aufnehmen können.

In vorteilhafter Ausgestaltung der Erfindung können die umlaufenden Rippen in Bezug auf die Längsachse der Stützhülse einen Winkel kleiner α ≤ 30° besitzen. Hierdurch wird sichergestellt, dass die auf Zugbeanspruchung ausgelegten Stränge im Wesentlichen in Richtung der Zugbeanspruchung ausgerichtet sind und auf die durch die umlaufenden Rippen gekerbten Bereiche eine geringe Zugkraft wirkt.

In besonders bevorzugter Ausführungsform können die Rippen in Richtung des vom Flansch abgewandten Endes der Stützhülse in einem abnehmenden Winkel α in Bezug auf die Längsachse der Stützhülse verlaufen. Hierdurch werden auf eine mögliche Zugbeanspruchung besonders günstige Verhältnisse geschaffen.

Vorteilhafterweise kann zumindest eine Innendichtung in einer umlaufenden Nut in einem Bereich angeordnet sein, in dem die Rippen mit einem Winkel kleiner α ≤ 30° verlaufen. Hierbei muss die umlaufende Nut nicht unmittelbar senkrecht zur Längsachse der Stützhülse - auf dem kürzesten Weg - umlaufen, sondern kann auch ellipsenförmig an der Außenoberfläche der Stützhülse angeordnet sein. So wird die Innendichtung beim Aufschieben eines Rohrendes auf den Adapter erst nach und nach mit dem Rohrmaterial in Berührung kommen. Die hierbei auf die Innendichtung einwirkenden Scherkräfte können dadurch die Innendichtung nicht aus der Nut drängen.

In weiterer vorteilhafter Ausgestaltung der Erfindung können die Rippen am vom Flansch abgewandten Ende der Stützhülse parallel oder nahezu parallel zur Längsachse der Stützhülse verlaufen. Hierdurch verlaufen die Kerben im Rohr und die auf Zugbeanspruchung ausgelegten Stränge an einem Ende der Stützhülse nahezu parallel zur möglichen Richtung einer Zugbeanspruchung.

Vorteilhafterweise kann das vom Flansch abgewandte Ende der Stützhülse als Nocke ausgebildet sein.

In weiterer vorteilhafter Ausgestaltung kann auf der Innenseite der Presshülse eine Verzahnung ausgebildet sein. Stirnseitig kann die Nocke dabei zum besseren Aufschieben eines Rohrendes gerundet ausgeführt sein. Dabei ist der Verlauf der Rundung auf ein entsprechend kalibriertes Rohrende abgestimmt.

In vorteilhafter Ausgestaltung der Erfindung kann auf der Außenseite der Presshülse eine umlaufende Nut zur Aufnahme einer Außendichtung des Pressverbinders angeordnet sein. Damit hat die Außenseite der Presshülse einen geeigneten Anschlussbereich für einen radial verformbaren Pressverbinder. Die Position der Nut richtet sich dabei nach genormten und bereits am Markt erhältlichen Pressverbindern. Für Pressverbinder ohne oder mit einer anderweitig ausgestatteten Dichtung werden auf der Außenseite der Presshülse entsprechende Maßnahmen für einen passenden Anschlussbereich ergriffen.

Vorteilhafterweise kann die Presshülse in Bezug auf die Stützhülse aus einem duktileren Material bestehen. Hierdurch hat das Material der Stützhülse eine ausreichende Stabilität gegenüber den beim Pressvorgang eingeleiteten radialen Kräften, wohingegen die Presshülse gegenüber der Stützhülse auf Verformung ausgelegt ist.

In vorteilhafter Ausgestaltung kann der Flansch aus einer schräg verlaufenden Wandung bestehen, die einen Winkel β ungleich 90° in Bezug auf die Längsachse der Stützhülse aufweist. Beim Verpressen mit einem Pressverbinder weicht die Flanschwand unter der Krafteinleitung leichter aus als bei senkrecht stehender Wandung, die einen stärkeren Widerstand bieten würde.

Vorteilhafterweise kann die mediumseitige Flanschfläche eine strömungsgünstige Schräge aufweisen. Dies verhindert unnötige Störungen durch Wirbelbildung im strömenden Medium.

In weiterer vorteilhafter Ausgestaltung kann der Flansch aus einer schräg verlaufenden Wandung mit im Wesentlichen gleichbleibender Wanddicke bestehen, die einen Winkel β kleiner 90° in Bezug auf die Längsachse der Stützhülse aufweist, wobei auf der mediumseitigen Flanschfläche eine strömungsgünstige Schräge ausgebildet ist. Gleichzeitig bewirkt ein Verkippen der Flanschwand, dass die Presshülse zudem eine axiale Bewegung ausführt und das im Adapterstück befindliche Rohrende quasi zusätzlich eingezogen wird.

Ein weiterer Aspekt der Erfindung schließt ein Verfahren zum Verbinden von Rohrenden mit einem Adapterstück ein, bei dem aus der Wandung des Flansches eine strömungsgünstige Schräge ausgebildet wird, wobei mittels eines Pressverbinders beim Verpressen die schräg verlaufende Wandung des Flansches vom Ausgangswinkel β weiter zu kleineren Winkeln verkippt wird und so die Endstellung der Schräge eingestellt wird.

Ausführungsbeispiele der Erfindung werden anhand einer schematischen Zeichnung näher erläutert. Darin zeigen:
Fig. 1 einen Querschnitt eines Adapterstücks, und
Fig. 2 eine Ansicht der Stützhülse mit Rippen.

Einander entsprechende Teile sind in allen Figuren mit denselben Bezugszeichen versehen.

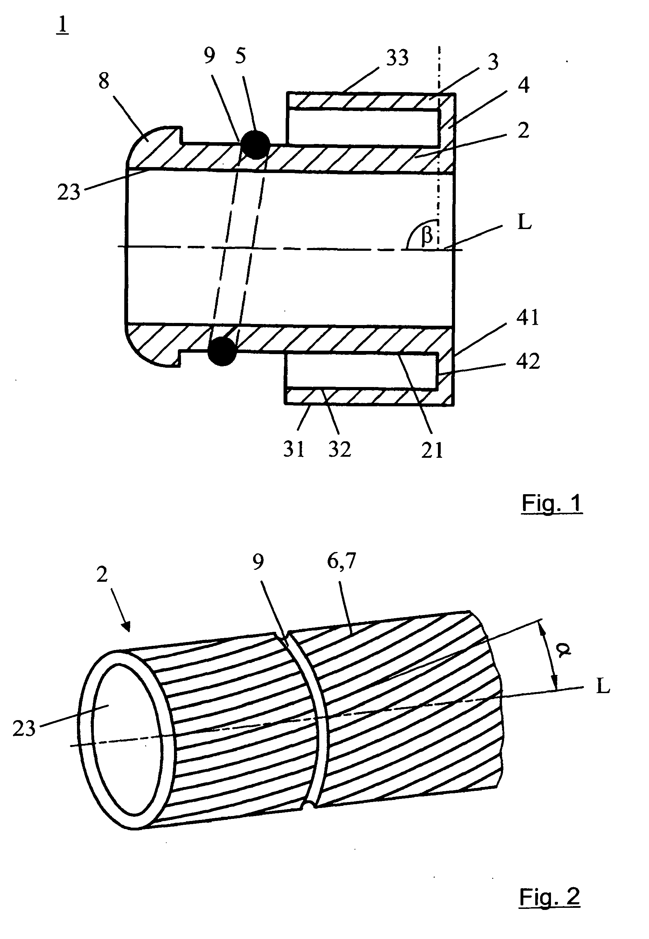

Zum Verbinden von Rohren gleicher oder unterschiedlicher Rohrquerschnitte zeigt Fig. 1 einen Querschnitt eines Adapterstücks 1. Es besteht aus einer im Inneren eines Rohres anordenbaren Stützhülse 2, einer auf der Außenseite eines Rohres anordenbaren Presshülse 3 und einem die Einschublänge eines Rohres begrenzenden Flansch 4. Auf der Außenseite der Stützhülse 2 ist eine flexible Innendichtung 5 angeordnet, die zur Rohrinnenseite hin abdichtet. Die Außenseite 31 der Presshülse 3 weist in diesem Falle einen ebenen Anschlussbereich 33 für einen radial verformbaren Pressverbinder auf. Die Stützhülse 2, die Presshülse 3 und der Flansch 4 sind aus einem Stück ausgebildet und bestehen aus dem gleichen Material. Ein derartiger Adapter 1 kann entweder aus Vollmaterial durch spanende Bearbeitung oder durch Tiefziehverfahren hergestellt werden. Das vom Flansch 4 abgewandte Ende 23 der Stützhülse 2 ist als Nocke 8 ausgebildet. Die Innenseite der Presshülse 32 ist in Fig. 1 glatt ausgebildet. Bereits eine glatte Innenoberfläche reicht üblicherweise aus, für ein Rohr einen ausreichenden Halt im Adapter 1 zu gewährleisten. Der Flansch 4 besteht in diesem Falle auf der rohrseitigen Flanschfläche aus einer gerade verlaufenden Wandung, die einen Winkel β gleich 90° in Bezug auf die Längsachse L der Stützhülse 2 aufweist. Die mediumseitige Flanschfläche 41 weist eine strömungsgünstige Schräge auf.

Fig. 2 zeigt eine Ansicht der Stützhülse 2 mit einer auf der Außenseite schraubenlinienförmig umlaufende Verzahnung 6, ausgebildet als Rippen 7. Die schraubenlinienförmigen Rippen 7 laufen weniger als einen Gewindegang um die Oberfläche der Stützhülse 21 um. In Richtung des vom Flansch 4 abgewandten Endes 23 der Stützhülse 2 verlaufen die Rippen 7 in einem abnehmenden Winkel α in Bezug auf die Längsachse L der Stützhülse 2. Eine Innendichtung 5 wird in einer Nut 9 in einem Bereich angeordnet, in dem die Rippen mit einem Winkel kleiner α ≤ 30° verlaufen. Am vom Flansch 4 abgewandten Ende 23 der Stützhülse 2 verlaufen die Rippen 7 parallel oder nahezu parallel zur Längsachse L der Stützhülse 2.

### Bezugszeichenliste

- 1: Adapterstück
- 2: Stützhülse
- 21: Außenseite der Stützhülse
- 23: vom Flansch abgewandtes Ende der Stützhülse
- 3: Presshülse
- 31: Außenseite der Presshülse
- 32: Innenseite der Presshülse
- 33: Anschlussbereich
- 4: Flansch
- 41: mediumseitige Flanschfläche
- 42: rohrseitige Flanschfläche
- 5: Innendichtung
- 6: Verzahnung
- 7: Rippen
- 8: Nocke
- 9: Nut
- L: Längsachse der Stützhülse
- α: Winkel zwischen Rippen und Längsachse L
- β: Winkel zwischen Wandung der Flanschfläche und Längsachse L

## Patentansprüche

1. Adapterstück (1) zum Verbinden von Rohren gleicher oder unterschiedlicher Rohrquerschnitte,
- mit einer im Inneren eines Rohres anordenbaren Stützhülse (2), einer auf der Außenseite eines Rohres anordenbaren Presshülse (3) und einem die Einschublänge eines Rohres begrenzenden Flansch (4),
- wobei auf der Außenseite der Stützhülse (2) zumindest eine flexible Innendichtung (5) angeordnet ist, die zur Rohrinnenseite hin abdichtet, und
- die Außenseite (31) der Presshülse (3) einen geeigneten Anschlussbereich (33) für einen radial verformbaren Pressverbinder aufweist, wobei die Außenseite der Stützhülse (21) eine schraubenlinienförmig umlaufende Verzahnung (6) aufweist,
**dadurch gekennzeichnet,**
**dass** die schraubenlinienförmige Verzahnung (6) weniger als einen Gewindegang umläuft.

2. Adapterstück nach Anspruch 1, **dadurch gekennzeichnet, dass** Stützhülse (2), Presshülse (3) und Flansch (4) einstückig ausgebildet sind.

3. Adapterstück nach Anspruch 1, **dadurch gekennzeichnet, dass** Stützhülse (2), Presshülse (3) und Flansch (4) aus Kunststoff oder Metall bzw. einer Kombination aus beiden bestehen.

4. Adapterstück nach einem der Ansprüche 1 bis 3, **dadurch gekennzeichnet, dass** die schraubenlinienförmige Verzahnung (6) aus umlaufenden Rippen (7) besteht.

5. Adapterstück nach Anspruch 4, **dadurch gekennzeichnet, dass** die umlaufenden Rippen (7) in Bezug auf die Längsachse (L) der Stützhülse (2) einen Winkel kleiner α ≤ 30° besitzen.

6. Adapterstück nach Anspruch 4 oder 5, **dadurch gekennzeichnet, dass** die Rippen (7) in Richtung des vom Flansch (4) abgewandten Endes (23) der Stützhülse (2) in einem abnehmenden Winkel α in Bezug auf die Längsachse (L) der Stützhülse (2) verlaufen.

7. Adapterstück nach Anspruch 6, **dadurch gekennzeichnet, dass** zumindest eine Innendichtung (5) in einer umlaufenden Nut (9) in einem Bereich angeordnet ist, in dem die Rippen mit einem Winkel kleiner α ≤ 30° verlaufen.

8. Adapterstück nach einem der Ansprüche 4 bis 7, **dadurch gekennzeichnet, dass** die Rippen (7) am vom Flansch (4) abgewandten Ende (23) der Stützhülse (2) parallel oder nahezu parallel zur Längsachse (L) der Stützhülse (2) verlaufen.

9. Adapterstück nach einem der Ansprüche 1 bis 8, **dadurch gekennzeichnet, dass** das vom Flansch (4) abgewandte Ende (23) der Stützhülse (2) als Nocke (8) ausgebildet ist.

10. Adapterstück nach einem der Ansprüche 1 bis 9, **dadurch gekennzeichnet, dass** auf der Innenseite der Presshülse (32) eine Verzahnung (6) ausgebildet ist.

11. Adapterstück nach einem der Ansprüche 1 bis 10, **dadurch gekennzeichnet, dass** auf der Außenseite der Presshülse (31) eine umlaufende Nut zur Aufnahme einer Außendichtung des Pressverbinders angeordnet ist.

12. Adapterstück nach einem der Ansprüche 1 bis 11, **dadurch gekennzeichnet, dass** die Presshülse (3) in Bezug auf die Stützhülse (2) aus einem duktileren Material besteht.

13. Adapterstück nach einem der Ansprüche 1 bis 12, **dadurch gekennzeichnet, dass** der Flansch (4) aus einer schräg verlaufenden Wandung besteht, die einen Winkel β ungleich 90° in Bezug auf die Längsachse (L) der Stützhülse (2) aufweiset.

14. Adapterstück nach Anspruch 13, **dadurch gekennzeichnet, dass** die mediumseitige Flanschfläche (41) eine strömungsgünstige Schräge aufweist.

15. Adapterstück nach Anspruch 13 oder 14, **dadurch gekennzeichnet, dass** der Flansch (4) aus einer schräg verlaufenden Wandung mit im Wesentlichen gleichbleibender Wanddicke besteht, die einen Winkel β kleiner 90° in Bezug auf die Längsachse (L) der Stützhülse (2) aufweist, wobei auf der mediumseitigen Flanschfläche (42) eine strömungsgünstige Schräge ausgebildet ist.

16. Verfahren zum Verbinden von Rohrenden mit einem Adapterstück nach einem der Ansprüche 13 bis 15, **dadurch gekennzeichnet, dass** mittels eines Pressverbinders beim Verpressen die schräg verlaufende Wandung des Flansches (4) vom Ausgangswinkel β weiter zu kleineren Winkeln verkippt wird und so die Endstellung der Schräge eingestellt wird.

## Claims

1. Adapter piece (1) for connecting pipes having the same or different pipe cross-sections,
- having a support sleeve (2) which can be arranged inside a pipe, a compression sleeve (3) which can be arranged at the outer side of a pipe, and a flange (4) which delimits the insertion length of a pipe,
- there being arranged on the outer side of the support sleeve (2) at least one flexible inner seal (5) which seals in the direction towards the pipe inner side, and
- the outer side (31) of the compression sleeve (3) having a suitable connection region (33) for a radially deformable compression connector,
- the outer side of the support sleeve (21) having a tooth arrangement (6) which extends round in the manner of a helical line,
**characterised in that**
the tooth arrangement (6) in the form of a helical line extends round for less than one thread turn.

2. Adapter piece according to claim 1, **characterised in that** the support sleeve (2), compression sleeve (3) and flange (4) are constructed in an integral manner.

3. Adapter piece according to claim 1, **characterised in that** the support sleeve (2), compression sleeve (3) and flange (4) comprise plastics material or metal or a combination of both.

4. Adapter piece according to any one of claims 1 to 3, **characterised in that** the tooth arrangement (6) in the form of a helical line comprises circumferential ribs (7).

5. Adapter piece according to claim 4, **characterised in that** the circumferential ribs (7) have an angle α ≤ 30° with respect to the longitudinal axis (L) of the support sleeve (2).

6. Adapter piece according to claim 4 or claim 5, **characterised in that** the ribs (7) extend in the direction of the end (23) of the support sleeve (2), which end is remote from the flange (4), at a decreasing angle α with respect to the longitudinal axis (L) of the support sleeve (2).

7. Adapter piece according to claim 6, **characterised in that** at least one inner seal (5) is arranged in a circumferential groove (9) in a region in which the ribs extend at an angle α ≤ 30°.

8. Adapter piece according to any one of claims 4 to 7, **characterised in that** the ribs (7) at the end (23) of the support sleeve (2), which end is remote from the flange (4), extend parallel or almost parallel with the longitudinal axis (L) of the support sleeve (2).

9. Adapter piece according to any one of claims 1 to 8, **characterised in that** the end (23) of the support sleeve (2), which end is remote from the flange (4), is constructed as a cam (8).

10. Adapter piece according to any one of claims 1 to 9, **characterised in that** a tooth arrangement (6) is formed on the inner side of the compression sleeve (32).

11. Adapter piece according to any one of claims 1 to 10, **characterised in that** a circumferential groove for receiving an outer seal of the compression connector is arranged on the outer side of the compression sleeve (31).

12. Adapter piece according to any one of claims 1 to 11, **characterised in that** the compression sleeve (3) comprises a more ductile material compared with the support sleeve (2).

13. Adapter piece according to any one of claims 1 to 12, **characterised in that** the flange (4) comprises an obliquely extending wall which has an angle β which is not equal to 90° with respect to the longitudinal axis (L) of the support sleeve (2).

14. Adapter piece according to claim 13, **characterised in that** the medium-side flange face (41) has a chamfer which promotes flow.

15. Adapter piece according to claim 13 or claim 14, **characterised in that** the flange (4) comprises an obliquely extending wall having a substantially consistent wall thickness, which has an angle β of less than 90° with respect to the longitudinal axis (L) of the support sleeve (2), a chamfer which promotes flow being formed on the medium-side flange face (42).

16. Method for connecting pipe ends having an adapter piece according to any one of claims 13 to 15, **characterised in that**, by means of a compression connector, during the compression operation, the obliquely extending wall of the flange (4) is tilted further from the starting angle β to smaller angles and the end position of the chamfer is thus adjusted.

## Revendications

1. Pièce d'adaptateur (1) pour relier des tubes de sections de tube identiques ou différentes,
- comprenant une douille d'appui (2) pouvant être agencée à l'intérieur d'un tube, une douille de compression (3) pouvant être agencée sur le côté extérieur d'un tube, et un flasque (4) limitant la longueur d'insertion d'un tube,
- au moins un joint d'étanchéité intérieur (5), flexible, étant agencé sur le côté extérieur de la douille d'appui (2) et assurant l'étanchéité par rapport au côté intérieur du tube, et
- le côté extérieur (31) de la douille de compression (3) présentant une zone de raccordement (33) appropriée pour un raccord à sertir déformable radialement, et le côté extérieur (21) de la douille d'appui présentant une denture (6) périphérique sous forme de lignes en hélice,
**caractérisée en ce que** la denture (6) sous forme de lignes en hélice tourne sur moins que la valeur d'un pas de l'hélice ou filetage.

2. Pièce d'adaptateur selon la revendication 1, **caractérisée en ce que** la douille d'appui (2), la douille de compression (3) et le flasque (4) sont réalisés d'un seul tenant.

3. Pièce d'adaptateur selon la revendication 1, **caractérisée en ce que** la douille d'appui (2), la douille de compression (3) et le flasque (4) sont réalisés en matière plastique ou en métal, ou bien en une combinaison des deux.

4. Pièce d'adaptateur selon l'une des revendications 1 à 3, **caractérisée en ce que** la denture (6) sous forme de lignes en hélice est formée par des nervures périphériques (7).

5. Pièce d'adaptateur selon la revendication 4, **caractérisée en ce que** les nervures périphériques (7) présentent par rapport à l'axe longitudinal (L) de la douille d'appui (2), un angle inférieur à α ≤ 30°.

6. Pièce d'adaptateur selon la revendication 4 ou la revendication 5, **caractérisée en ce que** les nervures (7) s'étendent en direction de l'extrémité (23) de la douille d'appui (2), qui est opposée à celle où se trouve le flasque (4), avec un angle α décroissant par rapport à l'axe longitudinal (L) de la douille d'appui (2).

7. Pièce d'adaptateur selon la revendication 6, **caractérisée en ce qu'**au moins un joint d'étanchéité intérieur (5) est agencé dans une rainure périphérique (9), dans une zone dans laquelle les nervures s'étendent avec un angle inférieur à α ≤ 30°.

8. Pièce d'adaptateur selon l'une des revendications 4 à 7, **caractérisée en ce que** les nervures (7) s'étendent, au niveau de l'extrémité (23) de la douille d'appui (2), qui est opposée à celle où se trouve le flasque (4), parallèlement ou pratiquement parallèlement à l'axe longitudinal (L) de la douille d'appui (2).

9. Pièce d'adaptateur selon l'une des revendications 1 à 8, **caractérisée en ce que** l'extrémité (23) de la douille d'appui (2), qui est opposée à celle où se trouve le flasque (4), est réalisée sous forme de mentonnet (8).

10. Pièce d'adaptateur selon l'une des revendications 1 à 9, **caractérisée en ce que** sur le côté intérieur (32) de la douille de compression, est formée une denture (6).

11. Pièce d'adaptateur selon l'une des revendications 1 à 10, **caractérisée en ce que** sur le côté extérieur (31) de la douille de compression, est agencée une rainure annulaire destinée à accueillir un joint d'étanchéité extérieur du raccord à sertir.

12. Pièce d'adaptateur selon l'une des revendications 1 à 11, **caractérisée en ce que** la douille de compression (3) est constituée d'un matériau plus ductile par rapport à la douille d'appui (2).

13. Pièce d'adaptateur selon l'une des revendications 1 à 12, **caractérisée en ce que** le flasque (4) est formé par une paroi s'étendant de manière inclinée, qui présente un angle β différent de 90° par rapport à l'axe longitudinal (L) de la douille d'appui (2).

14. Pièce d'adaptateur selon la revendication 13, **caractérisée en ce que** la surface de flasque (41) située du côté du fluide, présente une zone d'inclinaison favorable à l'écoulement.

15. Pièce d'adaptateur selon la revendication 13 ou la revendication 14, **caractérisée en ce que** le flasque (4) est formé par une paroi d'une épaisseur de paroi sensiblement constante s'étendant de manière inclinée, qui présente un angle β inférieur à 90° par rapport à l'axe longitudinal (L) de la douille d'appui (2), une zone d'inclinaison favorable à l'écoulement étant formée sur la surface de flasque (42) située du côté du fluide.

16. Procédé pour relier des extrémités de tube à l'aide d'une pièce d'adaptateur selon l'une des revendications 13 à 15, **caractérisé en ce qu'**à l'aide d'un raccord à sertir, lors de la compression, la paroi du flasque (4), qui s'étend de manière inclinée, bascule à partir de l'angle β initial vers des angles plus petits, en établissant ainsi la position finale de l'inclinaison.
